# EUROPEAN PATENT APPLICATION

(11) **EP 4 023 893 A1**
(43) Date of publication of application: **06.07.2022**
(21) Application number: 21216204.4
(22) Date of filing: 21.12.2021
(51) Int. Cl.: F16B 2/22, A44B 13/00, F16B 45/00, A43C 5/00, F16B 19/10

(54) **COUPLING ELEMENT**

(30) Priority: 21.12.2020 IT 202000031760
(71) Applicant: Hawai Italia S.r.l., 37057 San Giovanni Lupatoto (VR) (IT)
(72) Inventor: Scipioni, Bruno, 37057 San Giovanni Lupatoto (VR) (IT); Ricci, Stefano, 37057 San Giovanni Lupatoto (VR) (IT)
(74) Representative: Fisauli, Beatrice A. M.

(57) **Abstract**

It is a coupling element, which may take the form of an eyelet, a loop, a hook, suitable for attachment to footwear, clothing, apparel or similar articles, difficult to wear, able to meet the aesthetic requirements of the market, and easy to apply.

## Description

The present invention relates, in general, to a coupling element. More particularly, it is a coupling element, such as an eyelet, a hook, a loop, made of a particular material and having a characteristic configuration, such that it can be used in a practical manner in various fields, from footwear and clothing to foodstuffs.

The invention will be described below where it conforms as an eyelet and where it is used in footwear.

But it is well understood that the application element according to the invention may also conform as a hook, loop or the like, and may be used not only on footwear, but also on other articles such as bags, wallets, clothing, food packaging and the like.

As is well known, eyelets are applied to footwear for the passage of laces or for simple ventilation of the footwear itself.

Usually, such eyelets are made of metal or metal alloys to ensure sufficient strength. However, this material is wear and tear over time, especially if the footwear comes into contact with water.

Consequently, the aesthetic performance of metal eyelets diminishes over time.

Thus, eyelets made of plastic materials were introduced onto the market. In fact, for some time now the footwear and clothing market has been demanding more and more so-called 'metal-free' articles, i.e. metal-free, to avoid possible corrosion (new international regulations are becoming increasingly stringent in this respect) or interference with metal detectors.

Furthermore, with the use of plastic eyelets, the costs of metal colouring are avoided, as the plastic material can already be coloured in the initial paste, so that the finished product never loses its original colour.

Plastic eyelets on the one hand solve aesthetic problems, but on the other hand are deficient in terms of mechanical strength.

Furthermore, plastic eyelets have application problems, as the partial plastic behaviour can prevent optimal attachment to the article.

To remedy this, plastic eyelets according to the known technique must be applied hot, making the steps for applying the eyelet to the article more complex, in particular, making the application time much longer.

Alternatively, the known technique involves the production and use of two separate parts, which are subsequently joined together; this technique has severe application limitations in the case of varying thicknesses.

These problems are also similar for other application elements, such as hooks or grommets, or others, made of plastic material.

The purpose and function of the present invention is to provide an application element, be it an eyelet, a hook, a strap, or the like, to be applied to footwear, articles of clothing, packaging for the food or non-food sector, and other similar articles, which overcomes the problems of the known technique.

A further scope of the invention is to provide an application element which is difficult to wear and which can easily meet the aesthetic requirements of the market.

A further purpose of the present invention is to provide an application element that can be easily applied without any thermal intervention.

Still another purpose of the invention is to provide an application element which can be applied in a practical and simple manner to articles having different and variable thicknesses, without the need to make any dimensional and structural changes to the coupling element itself.

These and other purposes are achieved by a coupling element to be applied to footwear, clothing, packaging or other similar articles, comprising a head and an annular portion protruding from the head.

The head and the annular portion are pierced by a through hole and the head comprises a bottom surface.

In particular, the coupling element according to the invention is characterised by the fact that at least one protruding element protrudes from the lower surface, which is suitable for improving the grip of the eyelet with the respective support.

Advantageously, the one or more protruding elements may be arranged near, but not at, the perimeter edge of the head, so as not to remain undesirably in view.

Moreover, the one or more protruding elements may comprise a cylindrical portion, joined to the head, and a conical portion, joined to the cylindrical portion, so as to facilitate the operations of clasping the eyelet to the respective support.

Additionally, the one or more protruding elements may comprise an arched outer surface and a rectilinear inner surface, so as to conform to a shark's fin and facilitate engagement.

Advantageously, the one or more protruding elements may comprise a protruding and inclined profile arranged in correspondence and continuity with the perimeter edge of the head, so as to facilitate the operations of making the mating element.

In addition, the annular portion may have an inner surface, the lower portion of which has horizontal reliefs to facilitate the attachment of the coupling element to the support.

Also for this purpose, the annular portion may comprise a first part of cylindrical shape and a second part of conical shape.

Advantageously, vertical ribs, joined to the annular portion, may protrude from the lower surface to reinforce the annular portion itself.

In addition, to facilitate the creation of a hole in the substrate, the annular portion may include an end portion with notches.

For the same purpose, the annular portion may comprise a convex or concave lower edge.

Further features and details of the invention may be better understood from the following description, which is given by way of non-limiting example, as well as from the accompanying drawing board in which:
fig. 1 is a side sectional view of a coupling element, specifically an eyelet, according to the invention;
Fig. 2 is a cross-sectional side view of a coupling element, specifically an eyelet according to a first variant of the invention;
Fig. 3 is a side view in section of a coupling element, specifically an eyelet according to a second variant of the invention;
Fig. 4 is a side view in section of a coupling element, specifically an eyelet according to a third variant of the invention, in the configuration resulting from its application to a support;
Fig. 5 is a cross-sectional side view of a coupling element, specifically an eyelet according to a fourth variant of the invention;
Fig. 6 is a cross-sectional side view of a coupling element, specifically an eyelet according to a fifth variant of the invention;
Fig. 7 is a bottom view of the eyelet of Fig. 6;
Fig. 8 is a cross-sectional side view of a coupling element, specifically an eyelet according to a sixth variant of the invention, in the configuration resulting from its application to a support;
Fig. 9 is a side view of the eyelet of Fig. 8;
Fig. 10 is a side view of a coupling element, specifically an eyelet according to a seventh variant of the invention;
fig. 11 is a sectional side view of a coupling element, specifically an eyelet according to an eighth variant of the invention;
Fig. 12 is a top view of a coupling element, specifically an eyelet according to a ninth variant of the invention;
Fig. 13 is a side sectional view of the eyelet of Fig. 12;
fig. 14 is a top view of a coupling element, specifically an eyelet according to a tenth variant of the invention;
fig. 15 is a cross-sectional side view of the eyelet of figure 14.

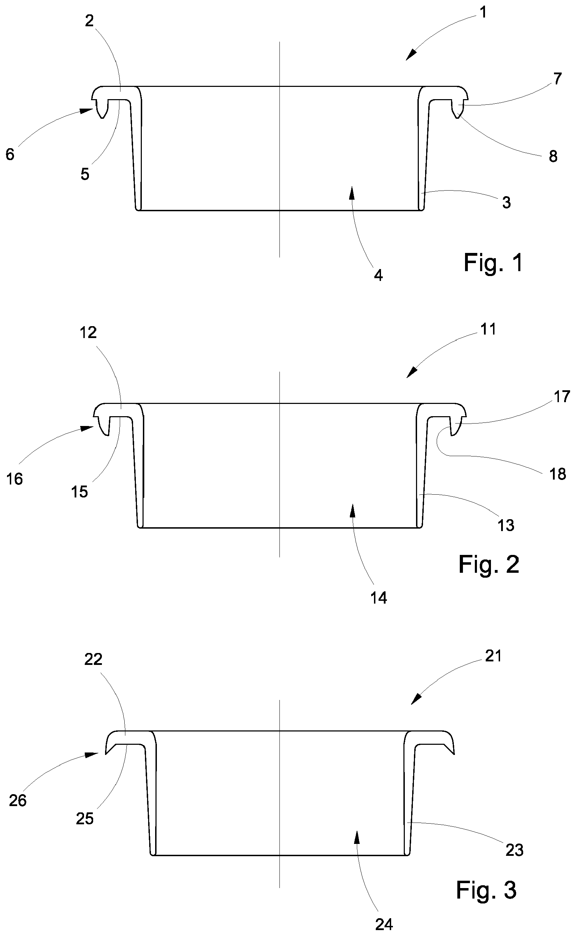

With reference to figure 1, 1 denotes a coupling element, specifically an eyelet, capable of being attached to a support such as a fabric, an upper of a shoe, a packaging for a food product, or the like.

The eyelet 1, made of a composite material, comprises a head 2 and an annular portion 3, protruding from the head 2, all pierced by a through hole 4.

The head 2 comprises a lower surface 5 from which protruding elements 6 project downwards, arranged near, but not at, the perimeter edge of the head 2.

In particular, the protruding elements 6 each comprise a cylindrical portion 7, joined to the head 2, and a conical portion 8, joined to the cylindrical portion 7.

The protruding elements 6 have the function of improving the attachment of the loop to the respective support.

According to a first variant of the invention, illustrated in figure 2, an eyelet 11 is referred to as an eyelet suitable for attachment to a support such as a fabric or an upper of a shoe.

The eyelet 11, made of a composite material, comprises a head 12 and an annular portion 13, protruding from the head 12, all pierced by a through hole 14.

The head 12 comprises a lower surface 15 from which project downwardly protruding elements 16 are arranged near, but not at, the perimeter edge of the head 12.

In particular, the protruding elements 16 comprise an arched outer surface 17 and a linear inner surface 18, so as to conform to a shark fin.

Similarly to the eyelet 1, the protruding elements 16 of the eyelet 11 also have the function of improving the clinging of the same eyelet to the respective support.

According to a second variant of the invention, illustrated in Figure 3, an eyelet 21 is referred to as an eyelet suitable for attachment to a support.

The eyelet 21, made of a composite material, comprises a head 22 and an annular portion 23, protruding from the head 22, all pierced by a through hole 24.

The head 22 comprises a lower surface 25 from which a projecting profile 26 protrudes downwards, arranged at the perimeter edge of the head 22.

In other words, the projecting profile 26 is in continuity with the perimeter edge of the head 22 and is arranged inclined outwards.

Similarly to the previously described eyelets 1, 11, the protruding profile 26 of the eyelet 21 also has the function of improving the adherence of the same eyelet 21 to the respective support, in particular in the case of synthetic and non-synthetic leathers.

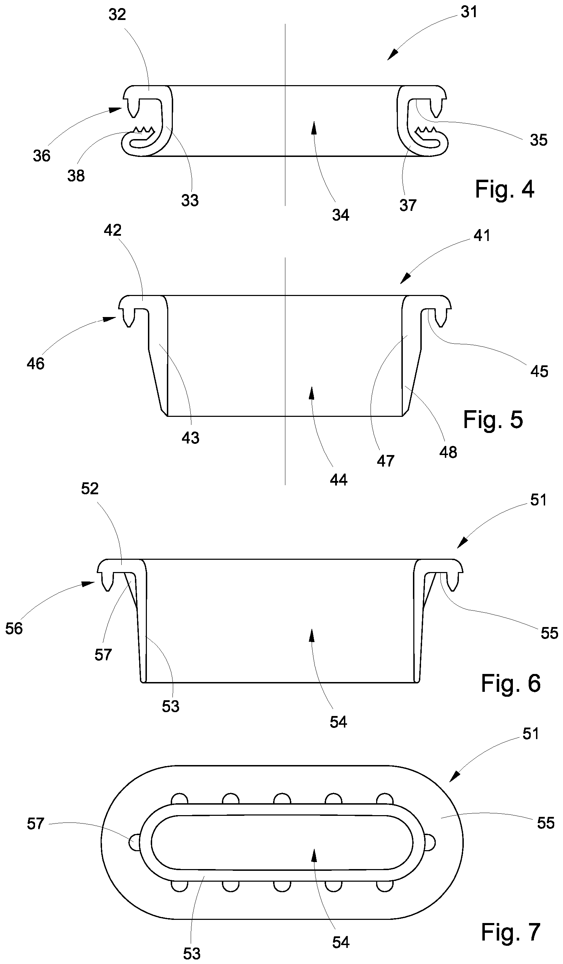

According to a third variant of the invention, shown in Figure 4, an eyelet 31 is referred to, illustrated according to the configuration in which it is applied to a support.

The eyelet 31, made of a composite material, comprises a head 32 and an annular portion 33, protruding from the head 32, all traversed by a through hole 34.

The head 32 comprises a lower surface 35 from which protruding elements 36 project downwards, arranged near, but not at, the perimeter edge of the head 32.

The annular portion 33 has an inner surface 37, the lower portion of which has horizontal reliefs 38.

When the eyelet 31 is applied to the relative support, the horizontal reliefs are opposed to the protruding elements 36, so as to improve the adherence of the same eyelet to the support and, in particular, so as not to cause the leather or the fabric to tear during the pulling of the same eyelet.

According to a fourth variant of the invention, shown in Figure 5, 41 denotes an eyelet, made of a composite material, comprising a head 42 and an annular portion 43, protruding from the head 42, all pierced by a through hole 44.

The head 42 comprises a lower surface 45 from which protruding elements 46 project downwards, arranged near, but not at, the perimeter edge of the head 42.

The annular portion 43 has a first part 47 having a cylindrical shape and a second part 48 having a conical shape. In other words, the annular portion has a homogeneous thickness below the head 42 and then reduces towards the lower end.

Such a conformation is used for supports of significant thickness, as it allows to counteract the closing forces and to avoid deformation of the first part 47 under the head 42.

According to a fifth variant of the invention, illustrated in Figures 6 and 7, by 51 is indicated an eyelet, made of a composite material, comprising a head 52 and an annular portion 53, protruding from the head 52, all crossed by a through hole 54.

The head 52 comprises a lower surface 55 from which protruding elements 56 project downwards, arranged near, but not at, the perimeter edge of the head 52.

Furthermore, vertical ribs 57 protrude from the lower surface 55, joined to the annular portion 53, which are intended to reinforce the same annular portion 53, so as to counteract the closing forces and prevent deformation of the first part of the same annular portion 53, close to the head 52.

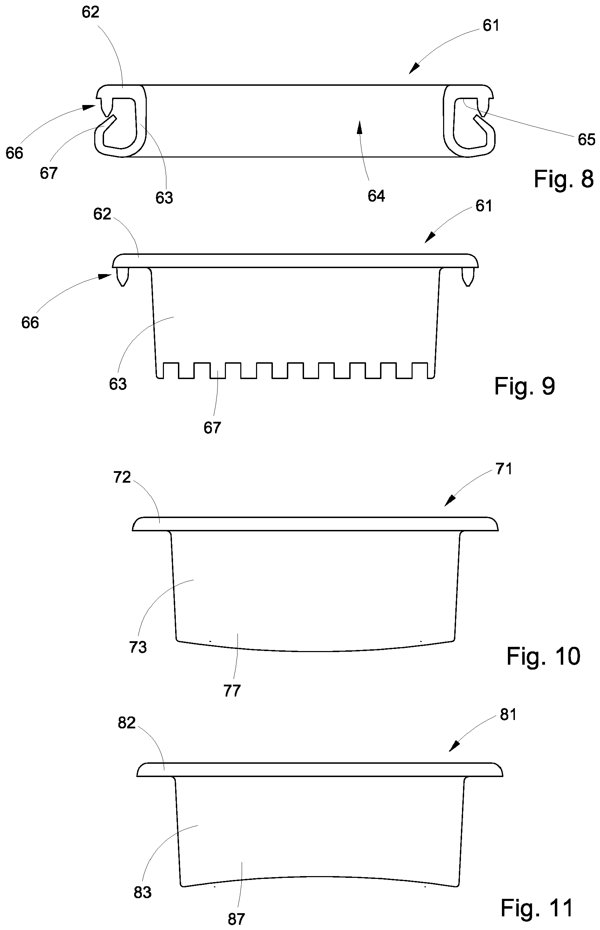

According to a sixth variant of the invention, shown in Figures 8 and 9, an eyelet 61, made of a composite material, comprises a head 62 and an annular portion 63, protruding from the head 62, all crossed by a through hole 64.

The head 62 comprises a lower surface 65 from which protruding elements 66 project downwards, arranged near, but not at, the perimeter edge of the head 62.

The annular portion 63 comprises an end portion with notches 67 designed to facilitate the clinging of the loop 61 after its application, in contrast to the protruding elements 66.

This advantage is evident from Figure 8, in which the eyelet 61 is illustrated according to the configuration in which it is applied to a support.

According to a seventh variant of the invention, illustrated in figure 10, an eyelet 71 is referred to as an eyelet, made of a composite material, comprising a head 72 and an annular portion 73, protruding from the head 72, all pierced by a through-hole.

The annular portion 73 comprises a lower edge 77 conformed to be slightly convex to improve the riveting of the eyelet 71 itself and to conform the portion behind the eyelet as a counter washer, if the support where it is applied so requires.

A similar advantage is obtained in the case of an eyelet 81, illustrated in figure 11 and made according to an eighth variant of the invention. The eyelet 81 comprises a head 82 and an annular portion 83 comprising a lower edge 87 shaped to be slightly concave.

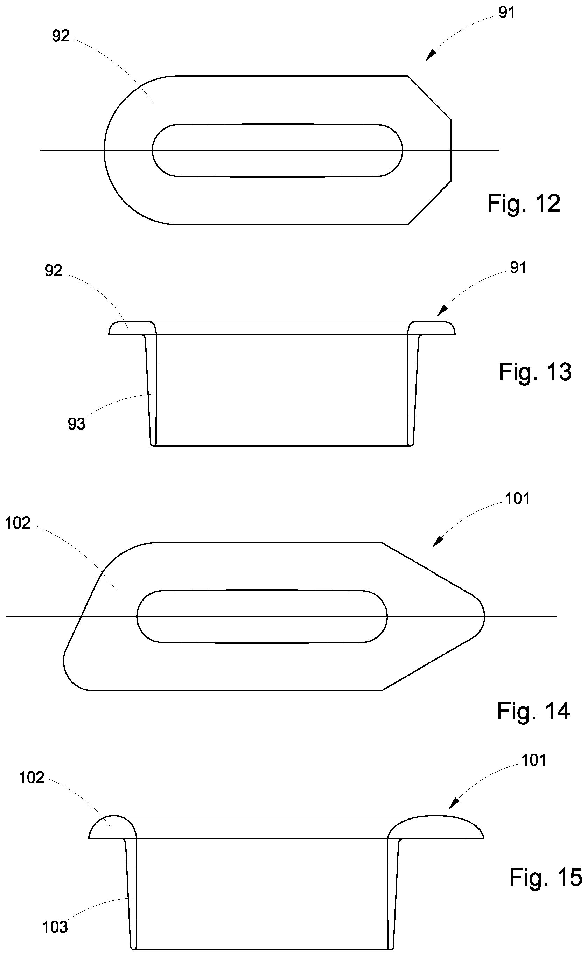

According to a ninth variant of the invention, illustrated in Figures 12 and 13, 91 denotes an eyelet, made of a composite material, comprising a head 92 and an annular portion 93 protruding from the head 92.

In particular, the perimeter edge of the head 92 has an irregular shape as illustrated in figure 12. The section of the same head 92 has a flat top, as illustrated in figure 13.

According to a tenth variant of the invention, illustrated in figures 14 and 15, 101 indicates an eyelet, made of a composite material, comprising a head 102 and an annular portion 103, protruding from the head 102.

In particular, the perimeter edge of the head 102 has an irregular shape, elongated at both ends, as illustrated in figure 14. The section of the same head 102 has a convex top, as illustrated in figure 15.

One or more of the eyelets described above have an oval conformation; however, they may also have a circular conformation.

Further variations are possible; for example, the shape of the protruding elements may vary, also depending on the application purposes of the eyelet itself.

Furthermore, the annular portion of the eyelet may also have a cross-section of a shape other than circular. It may, in fact, have an oval, square, rectangular or triangular shape internally and/or externally.

## Claims

1. Coupling element, such as an eyelet (1; 11; 21; 31; 41; 51; 61; 71, 81), a hook, a loop, suitable for attachment to footwear, clothing, apparel or similar articles, comprising a head (2; 12; 22; 32; 42; 52; 62; 72) and an anular portion (3; 13; 23; 33; 43; 53; 63; 73, 83) protruding from the head (2; 12; 22; 32; 42; 52; 62; 72, 82), the head (2; 12; 22; 32; 42; 52; 62; 72, 82) and the anular portion (3; 13; 23; 33; 43; 53; 63; 73, 83) being crossed by a through-hole (4; 14; 24; 34; 44; 54; 64; 74, 84), the head (2; 12; 22; 32; 42; 52; 62; 72) comprising a lower surface (5; 15; 25; 35; 45; 55; 65; 75), **characterized by the fact that** at least a protruding element (6; 16; 26; 36; 46; 56; 66) protrudes from the lower surface (5; 15; 25; 35; 45; 55; 65).

2. Coupling element (1; 11) according to the preceding claim, wherein the at least a protruding element (6; 16) is placed close to, but not at, the perimeter edge of the head (2; 12).

3. Coupling element (1) according to one of the preceding claims, wherein the at least a protruding element (6) comprises a cylindrical portion (7), joined to the head (2), and a conical portion (8), joined to the cylindrical portion (7).

4. Coupling element (11) according to claim 1 or 2, wherein the at least a protruding element (16) comprises an outer surface (17) that is curved and an inner surface (18) that is straight, so that it conforms to the shape of a shark fin.

5. Coupling element (21) according to claim 1, wherein the at least a protruding element (26) comprises a sloping and protruding profile, placed at, and in continuity with, the perimeter edge of the head (22).

6. Coupling element (31) according to claim 1, wherein the anular portion (33) has an inner surface (37), the lower part of which has horizontal reliefs (38).

7. Coupling element (41) according to claim 1, wherein the anular portion (43) comprises a first part (47) of cylindrical shape and a second part (48) of conical shape.

8. Coupling element (51) according to claim 1, wherein vertical ribs (57) protrude from the lower surface (55), said ribs (57) being joined to the anular portion (53), and suitable for reinforcing said anular portion (53).

9. Coupling element (61) according to claim 1, wherein the anular portion (63) comprises an end part with notches (67).

10. Coupling element (71, 81) according to claim 1, wherein the anular portion (73, 83) comprises a convex or concave lower edge (77, 87).
